# EUROPEAN PATENT APPLICATION

(11) **EP 3 483 820 A1**
(43) Date of publication of application: **15.05.2019**
(21) Application number: 17823811.9
(22) Date of filing: 23.03.2017
(51) Int. Cl.: G06Q 30/02, G06Q 30/06

(54) **SIMULATION DEVICE, SIMULATION SYSTEM, AND SIMULATION METHOD**

(30) Priority: 05.07.2016 JP 2016133614
(71) Applicant: Panasonic Intellectual Property Management Co., Ltd., Osaka-shi, Osaka 540-6207 (JP)
(72) Inventor: ITOH, Tomoaki, Osaka-shi, Osaka 540-6207 (JP); SHIN, Hidehiko, Osaka-shi, Osaka 540-6207 (JP); OKIMOTO, Yoshiyuki, Osaka-shi, Osaka 540-6207 (JP); FUKUI, Takayuki, Osaka-shi, Osaka 540-6207 (JP); YAMAGUCHI, Koichiro, Osaka-shi, Osaka 540-6207 (JP)
(74) Representative: Vigand, Philippe
(86) International application number: PCT/JP2017/011669
(87) International publication number: WO 2018/008203

(57) **Abstract**

A simulation device includes an acquisition unit that acquires people flow information indicating a flow of people moving in a facility such as a store, purchase data indicating at least one item that is a product or a service purchased in the facility, and price information indicating a price of the at least one item placed in the facility, a people flow model generator that generates a people flow model based on the people flow information, a purchase model generator that generates a purchase model based on the purchase data and the people flow information, and a simulation execution unit that calculates, based on the price information, the people flow model, and the purchase model, a predicted value of a purchase amount of the at least one item purchased by a person moving in the facility.

## Description

### TECHNICAL FIELD

The present disclosure relates to a simulation device, a simulation system, and a simulation method that simulate sales of a facility such as a store.

### BACKGROUND ART

PTL 1 discloses an analysis system that calculates an index of sales opportunity loss from data acquired from a monitoring camera and POS data.

### Citation List

### Patent Literature

PTL 1: Japanese Patent No. 5731766

### SUMMARY OF THE INVENTION

The present disclosure provides a simulation device, a simulation system, and a simulation method that effectively simulate sales of a facility such as a store.

A simulation device according to the present disclosure simulates a purchase amount of at least one item that is a product or a service purchased in a facility such as a store. The simulation device includes an acquisition unit that acquires people flow information indicating a flow of people moving in the facility, purchase data indicating the at least one item purchased in the facility, and price information indicating a price of the at least one item placed in the facility, a people flow model generator that generates a people flow model based on the people flow information, a purchase model generator that generates a purchase model based on the purchase data and the people flow information, and a simulation execution unit that calculates, based on the price information, the people flow model, and the purchase model, a predicted value of a purchase amount of the at least one item purchased by a person moving in the facility.

A simulation system according to the present disclosure simulates a purchase amount of at least one item that is a product or a service purchased in a facility such as a store. The simulation system includes a monitoring camera that outputs images resulting from imaging an inside of the facility, a purchase terminal device that generates and outputs purchase data indicating the at least one item purchased in the facility, and the simulation device that calculates a predicted value of the purchase amount of the at least one item from the images and the purchase data.

A simulation method for simulating a purchase amount of at least one item that is a product or a service purchased in a facility such as a store according to the present disclosure includes causing an acquisition unit to acquire people flow information indicating a flow of people moving in the facility, purchase data indicating the at least one item purchased in the facility, and price information indicating a price of the at least one item placed in the facility, causing a controller to generate a people flow model based on the people flow information, causing the controller to generate a purchase model based on the purchase data and the people flow information, and causing the controller to calculate, based on the price information, the people flow model, and the purchase model, a predicted value of the purchase amount of the at least one item purchased by a person moving in the facility.

The simulation device, the simulation system, and the simulation method of the present disclosure effectively simulate sales of a facility such as a store.

### BRIEF DESCRIPTION OF DRAWINGS

FIG. 1 is a block diagram showing a configuration of a simulation system of a first exemplary embodiment.
FIG. 2 is a block diagram showing an internal configuration of a controller of a simulation device of the first exemplary embodiment.
FIG. 3 is a diagram for describing area division of an inside of a store and a flow of people moving in the store according to the first exemplary embodiment.
FIG. 4 is an enlarged view of some of a plurality of areas shown in FIG. 3.
FIG. 5A is a table showing an example of traffic line information.
FIG. 5B is a table showing an example of area information.
FIG. 5C is a table showing an example of transition probability information.
FIG. 6 is a flowchart for describing an operation of calculating a transition probability according to the first exemplary embodiment.
FIG. 7A is a table showing an example of POS data.
FIG. 7B is a table showing an example of item information.
FIG. 7C is a table showing an example of purchase rate information.
FIG. 8 is a flowchart for describing an operation of calculating a purchase rate according to the first exemplary embodiment.
FIG. 9 is a flowchart for describing an operation of calculating a predicted value of a purchase amount according to the first exemplary embodiment.
FIG. 10 is a diagram for describing an operation of calculating the predicted value of the purchase amount according to the first exemplary embodiment.
FIG. 11 is a diagram showing an example of a screen display on a display unit according to the first exemplary embodiment.
FIG. 12 is a block diagram showing an internal configuration of a controller of a simulation device according to a second exemplary embodiment.
FIG. 13 is a diagram for describing a transition probability according to the second exemplary embodiment.
FIG. 14A is a table showing an example of inflow and outflow information.
FIG. 14B is a table showing an example of transition probability information.
FIG. 15 is a flowchart for describing an operation of calculating a transition probability according to the second exemplary embodiment.
FIG. 16 is a flowchart for describing an operation of calculating a predicted value of a purchase amount according to a third exemplary embodiment.
FIG. 17 is a block diagram showing an internal configuration of a controller of a simulation device according to a fourth exemplary embodiment.
FIG. 18 is a flowchart for describing an operation of calculating an optimum value of a parameter through simulation according to the fourth exemplary embodiment.

### DESCRIPTION OF EMBODIMENTS

Hereinafter, exemplary embodiments will be described in detail while referring to the drawings as appropriate. However, detailed description beyond necessity may be omitted. For example, a detailed description of a well-known matter and a duplicate description of substantially the same configuration may be omitted. Such omissions are intended to prevent the following description from being unnecessarily redundant and to help those skilled in the art to easily understand the following description. Note that the inventors provide the attached drawings and the following description to help those skilled in the art to fully understand the present disclosure, and the attached drawings and the following description are not intended to limit the subject matters of the claims.

### (First exemplary embodiment)

According to the present exemplary embodiment, provided is a simulation system that allows a sales amount of a store to be simulated on the assumption that a flow of people moving in the store, a layout of the store, or locations of items arranged in the store are changed. Specifically, the simulation system of the present exemplary embodiment generates a people flow model on a flow of people and a purchase model on purchase of items used in a simulation by modeling a current shopping pattern (a transition probability and a purchase rate) from information on a flow of people acquired from images taken by a monitoring camera, POS data acquired from a POS terminal device, information indicating a range of each of a plurality of areas resulting from dividing the inside of the store, and information on locations of items arranged in the store. Then, the simulation system calculates a predicted value of an item purchase amount (a sales amount of the store) when the flow of people, the layout of the store (area division), or the locations of items are changed on the models. This configuration allows an effect resulting from changing the flow of people, the layout of the store, or the locations of items to be estimated in advance.

### 1. Configuration

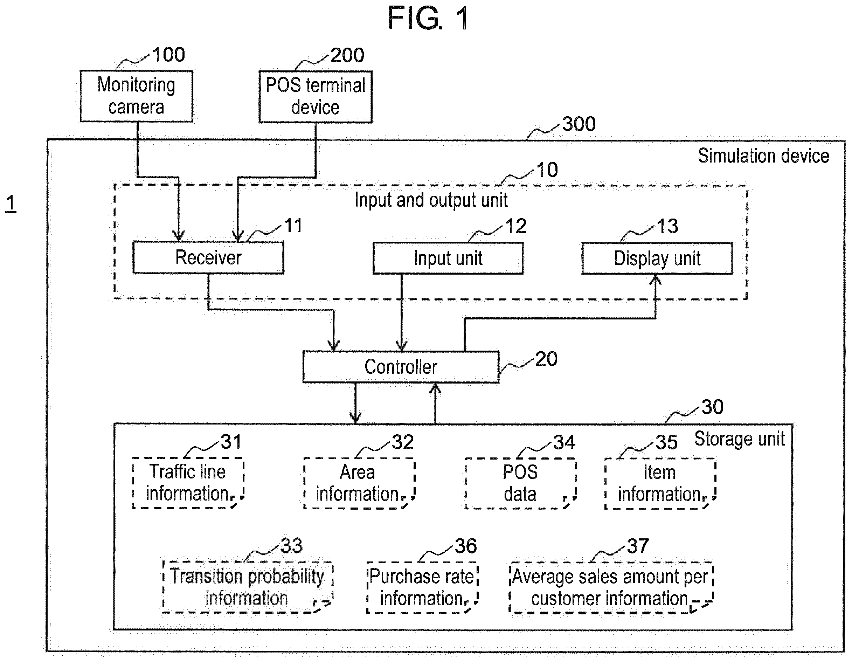

FIG. 1 shows a configuration of a simulation system of a first exemplary embodiment. Simulation system 1 includes at least one monitoring camera 100 that outputs images resulting from imaging an inside of a store, at least one POS terminal device 200 that generates and outputs POS data indicating items purchased in the store, and simulation device 300 that simulates an item purchase amount (a sales amount) when a flow of people, a layout of the store, or locations of items are changed from the images taken by monitoring camera 100 and the POS data generated by POS terminal device 200.

Monitoring camera 100 includes an imaging unit such as a charge-coupled device (CCD) image sensor, a complementary metal-oxide-semiconductor (CMOS) image sensor, or an N-channel metal oxide semiconductor (NMOS) image sensor, and takes images of the inside of the store. Monitoring camera 100 further includes an interface circuit used for communication with an external device based on a predetermined communication standard (for example, a local area network (LAN) or WiFi) and outputs the images of the inside of the store thus taken.

POS terminal device 200 includes a barcode reader equipped with a scanner, a CCD, or a laser and generates POS data 34 indicating items purchased by a person in the store. POS terminal device 200 further includes an interface circuit used for communication with an external device based on a predetermined communication standard (for example, a LAN or WiFi) and outputs POS data 34 thus generated.

Simulation device 300 includes input and output unit 10, controller 20 that controls a whole of simulation device 300, and storage unit 30 that stores various pieces of information that are input.

Input and output unit 10 includes receiver 11 that receives the images taken by monitoring camera 100 and POS data 34 generated by POS terminal device 200, input unit 12 that receives input from a user, and display unit 13 that displays a simulation result. Receiver 11 includes an interface circuit used for communication with an external device based on the predetermined communication standard (for example, a LAN or WiFi). Input unit 12 is, for example, a keyboard, a mouse, or a touch panel. Receiver 11 and input unit 12 serve as an acquisition unit that acquires information from the outside. Display unit 13 is, for example, a liquid crystal display.

Storage unit 30 stores information received by receiver 11 or information generated by controller 20. For example, storage unit 30 stores traffic line information (people flow information) 31 indicating a flow of people moving in the store, area information 32 indicating a range of each of a plurality of areas that constitute the inside of the store, transition probability information 33 indicating a probability of a move of a person between adjacent areas in the store, POS data 34 transmitted from POS terminal device 200, item information 35 indicating locations and prices of items arranged in the store, purchase rate information 36 indicating a purchase rate of an item, and average sales amount per customer information 37. Storage unit 30 can be configured with, for example, a random access memory (RAM), a dynamic random access memory (DRAM), a ferroelectric RAM, a flash memory, or a magnetic disk. Alternatively, storage unit 30 can be configured with any combination of a RAM, a DRAM, a ferroelectric RAM, a flash memory, and a magnetic disk.

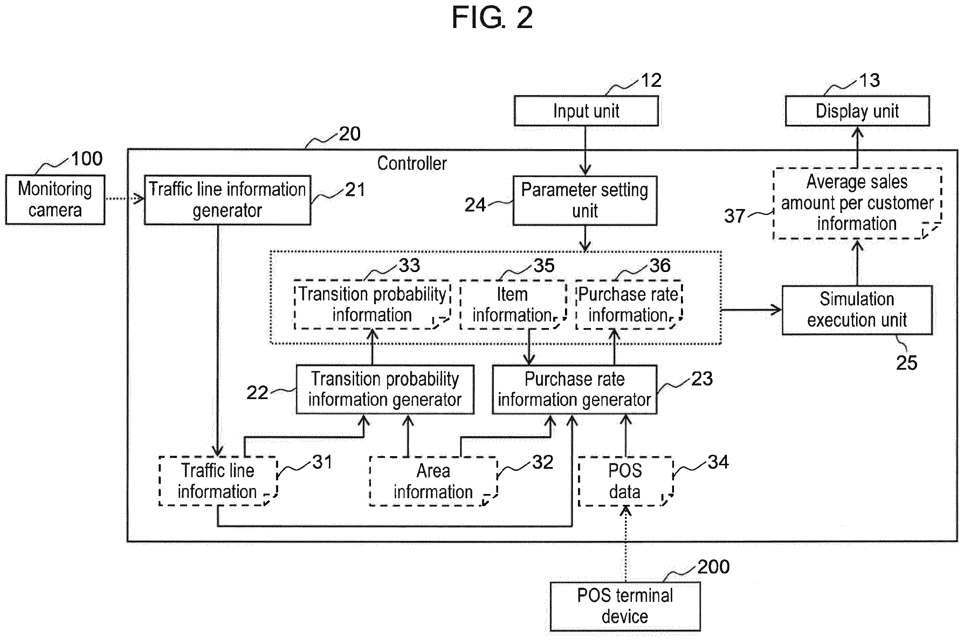

FIG. 2 shows an internal configuration of controller 20 in detail. In FIG. 2, pieces of information that are acquired by controller 20 and stored into storage unit 30 are indicated by doted lines. Controller 20 serves as an acquisition unit that acquires information stored in storage unit 30. Controller 20 includes traffic line information generator 21 that identifies a person shown in images taken by monitoring camera 100 and generates traffic line information 31 indicating, on a time-series basis, locations of the person thus identified, transition probability information generator (people flow model generator) 22 that generates transition probability information 33 from traffic line information 31 and area information 32, purchase rate information generator (purchase model generator) 23 that generates purchase rate information 36 based on item information 35, POS data 34, area information 32, and traffic line information 31. Note that, in FIG. 2, traffic line information generator 21 is included in controller 20 but may be configured separately from controller 20.

Controller 20 further includes parameter setting unit 24 that sets a parameter (a location of an item included in item information 35, a transition probability included in transition probability information 33, or a purchase rate included in purchase rate information 36) based on a change of a location of an item, a change of a transition probability, or a change of a purchase rate, which is input via input unit 12, and simulation execution unit 25 that calculates a predicted value of an item purchase amount per person based on the parameter thus set. Simulation execution unit 25 generates average sales amount per customer information 37 indicating the predicted value of the item purchase amount per person. A total sales amount of the store can be estimated from the predicted value of the item purchase amount per person. Display unit 13 displays an average sales amount per customer based on average sales amount per customer information 37.

Controller 20 can be configured with a semiconductor element or the like. A function of controller 20 may be implemented only by hardware or may be implemented by a combination of hardware and software. Controller 20 can be configured with, for example, a microcomputer, a central processing unit (CPU), a micro processing unit (MPU), a digital signal processor (DSP), a field-programmable gate array (FPGA), or an application specific integrated circuit (ASIC).

### 2. Operation

### 2.1 Generation of people move model (calculation of transition probability)

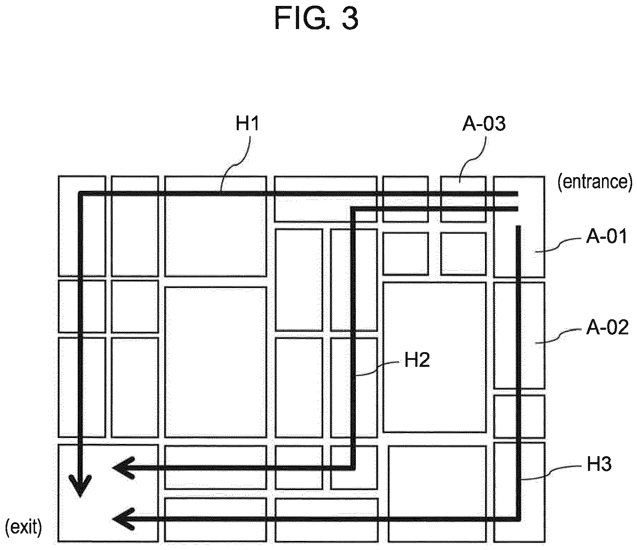

FIG. 3 shows a plurality of areas (for example, areas "A-01", "A-02", "A-03", and the like) resulting from dividing the inside of the store. Arrows H1, H2, H3 shown in FIG. 3 represent respective trajectories of people moving from an entrance of the store to an exit (a checkout). Items are arranged in each of the areas. Simulation device 300 of the present exemplary embodiment simulates a sales amount of the store based on which of the areas a person passes through (the transition probability) and whether the person purchases an item arranged in the area (the purchase rate).

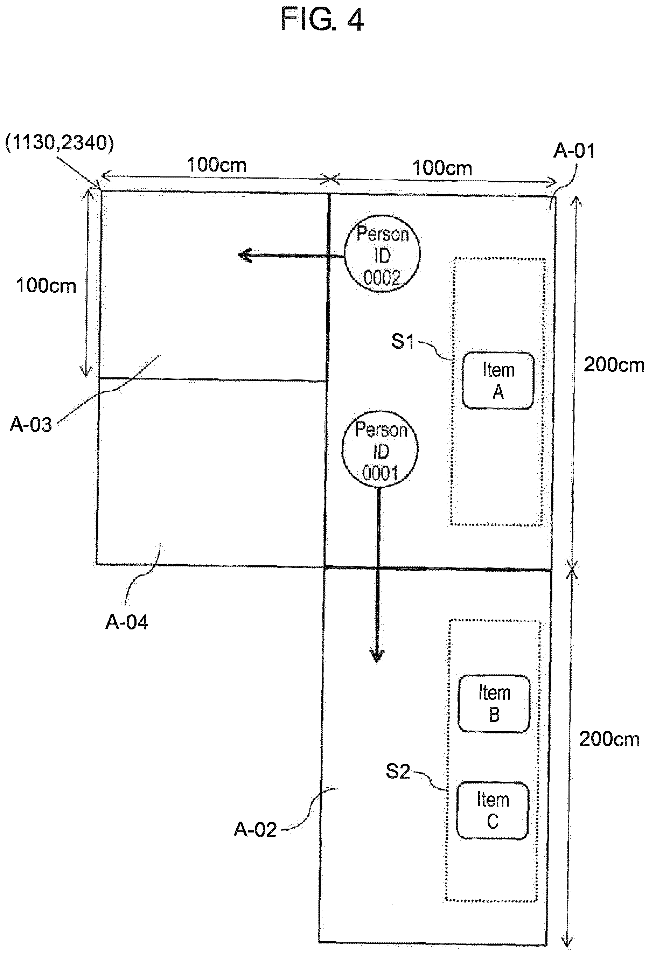

FIG. 4 is an enlarged view of a part of the inside of the store shown in FIG. 3. FIG. 4 shows a situation that a person identified as a person ID "0001" in images moves from the area "A-01" to the area "A-02", a person identified as a person ID "0002" moves from the area "A-01" to the area "A-03", and no one moves from the area "A-01" to the area "A-04". FIG. 4 further shows a situation that item shelf S1 including item A is disposed in the area "A-01", and item shelf S2 including item B and item C is disposed in the area "A-02".

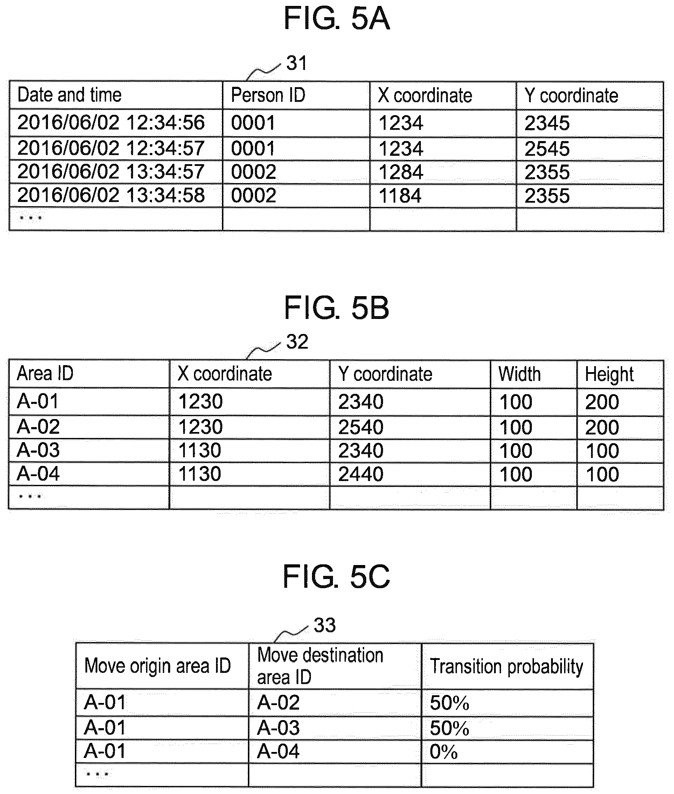

FIG. 5A shows an example of traffic line information 31 generated by identification, from images, of people moving in the store as shown in FIG. 3 and FIG. 4. Traffic line information 31 includes identification information (ID) on a person identified in the images, and information indicating where the person is located (an X coordinate and a Y coordinate) on a time-series basis. FIG. 5B shows an example of area information 32 indicating a range of each of the areas as shown in FIG. 3 and FIG. 4. Area information 32 includes identification information (ID) on each of the areas in the store and information on a range (an X coordinate, a Y coordinate, a width, and a height) of the area. FIG. 5C shows an example of transition probability information 33 indicating a transition probability calculated based on traffic line information 31 and area information 32.

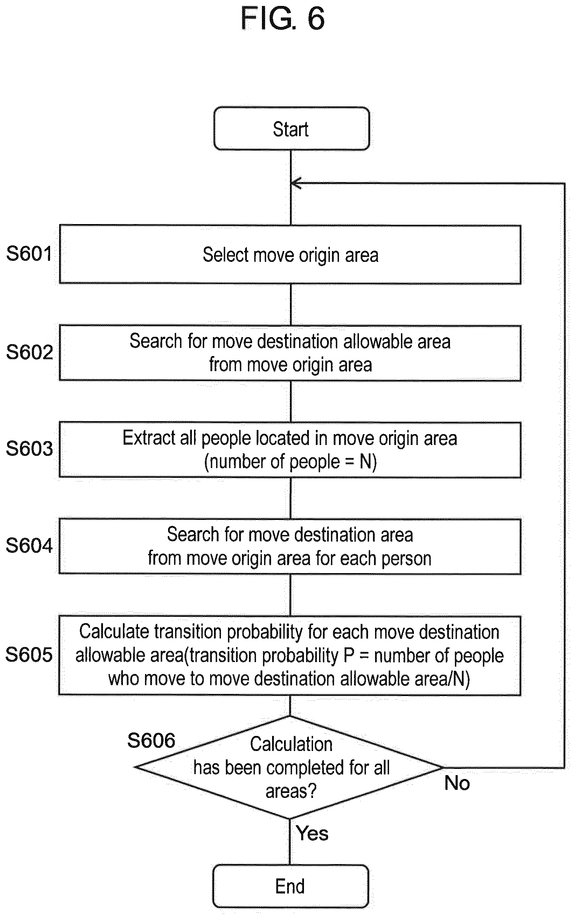

FIG. 6 shows an operation of transition probability information generator 22 by which a transition probability is calculated. Transition probability information generator 22 calculates a transition probability in a predetermined period (for example, one day) from traffic line information 31 in the predetermined period (for example, one day) to generate transition probability information 33. Transition probability information 33 generated by transition probability information generator 22 corresponds to a people move model (a people flow model) used in a simulation. Furthermore, transition probability information generator 22 serves as a people flow model generator that generates the people flow model.

Transition probability information generator 22 first selects one of the areas in the store (S601) and searches for an area to which a move is allowed from the area thus selected (move origin area) based on area information 32 (S602). For example, with respect to the move origin area "A-01" shown in FIG. 4, the move allowable areas "A-02", "A-03", "A-04" are found. Transition probability information generator 22 extracts all people located in the move origin area based on traffic line information 31 and area information 32 (S603). A person located in each of the areas can be extracted based on a location of the person (an X coordinate and a Y coordinate) indicated by traffic line information 31 and a range of the area (an X coordinate, a Y coordinate, a width, and a height) indicated by area information 32. For example, two people located in the move origin area "A-01" are extracted (the number of people N = 2). Transition probability information generator 22 searches for move destination areas to which the people located in the move origin area "A-01" have moved based on traffic line information 31 and area information 32 (S604). The move destination areas to which the people have moved can be found based on locations of the people indicated by traffic line information 31 (X coordinates and Y coordinates) and ranges of areas (X coordinates, Y coordinates, widths, and heights) indicated by area information 32. In the example shown in FIG. 4, "A-02" and "A-03" are found as move destination areas. Transition probability information generator 22 calculates a transition probability for each of move destination allowable areas from "transition probability P = the number of people who move to move destination allowable areas/the number of people N located in the move origin area (S605). In FIG. 4, transition probability P of a move from the move origin area "A-01" to the move destination allowable area "A-02" is represented by one person/two people = 50%, transition probability P of a move from the move origin area "A-01" to the move destination allowable area "A-03" is represented by one person/two people = 50%, and transition probability P of a move from the move origin area "A-01" to the move destination allowable area "A-04" is represented by no person/two people = 0%. When determining whether transition probabilities of moves from all move origin areas in the store have been calculated (S606) and determines that the calculation has not yet been completed, transition probability information generator 22 returns to step S601 and repeats the transition probability calculation processing.

Note that, in step S605 where a transition probability is calculated, an example is shown where a transition probability directly obtained from the number of people counted is used. Actual moves of people between the areas are discrete phenomena; thus, a value resulting from counting the number of people stochastically varies. Therefore, such a directly obtained transition probability may significantly vary with time. Thus, on the assumption that a transition probability between the areas gradually varies with time, it is effective that the transition probability calculated is smoothed in terms of time. As a smoothing method, a method using a moving average by which successive time-series transition probabilities are averaged, a kernel probability density estimation using a Gaussian function or the like, a particle filter on the assumption that transition probabilities have the Dirichlet distribution, or the like can be used. This configuration allows a simulation to be executed in consideration of variations in transition probability with time.

Furthermore, the example where the transition probability is calculated based on all people located in the move origin area has been given. This indicates that a transition probability of a move from the move origin area is constant for all visiting customers. For a more precise simulation, it is also effective that a transition probability is obtained for each specific customer group. In this case, the number of people located in an area is obtained for each customer group, and each transition probability is calculated. For such a customer group, it is effective that a customer stratum (housewives, white-collar workers, or blue-collar workers) estimated from a gender, an age, clothing, or the like is used. Alternatively, it is also effective that customer groups similar to each other in a certain respect such as a purchased item, a behavior in the store, or the like are automatically grouped by a clustering method such as k-means clustering based on POS data and a traffic line from entrance to the store until payment at a checkout.

### 2.2 Generation of purchase model (calculation of purchase rate)

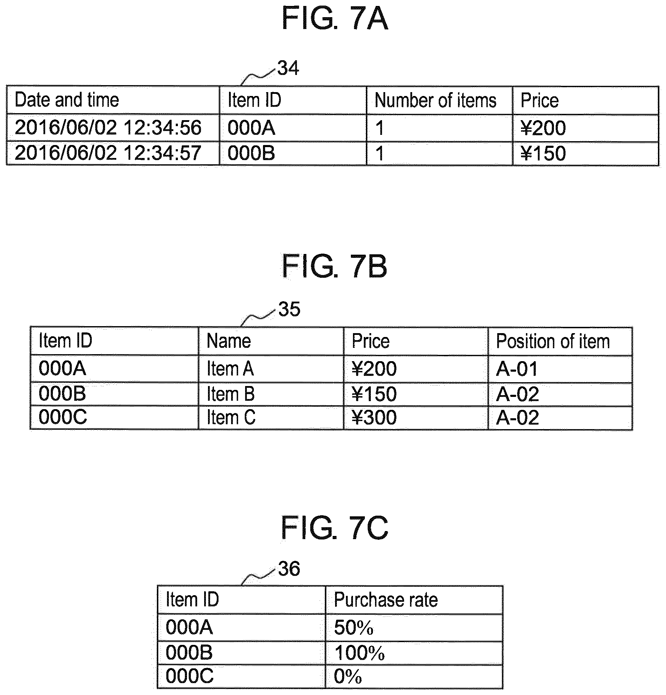

FIG. 7A shows an example of POS data 34 that is generated and output by POS terminal device 200. POS data 34 includes identification information (ID) of an item purchased, a number of the item, and a price of the item, and information on a date and time when the item is purchased. FIG. 7B shows an example of item information 35. Item information 35 includes identification information (ID) of an item, a name of the item, and a price (for example, a unit price) of the item, and an ID of an area, as a position of the item, where the item is placed. Note that item information 35 may include an ID of a shelf on which the item is placed. FIG. 7C shows purchase rate information 36 generated from POS data 34, item information 35, traffic line information 31, and area information 32. Purchase rate information 36 includes identification information (ID) of an item, and a purchase rate of the item.

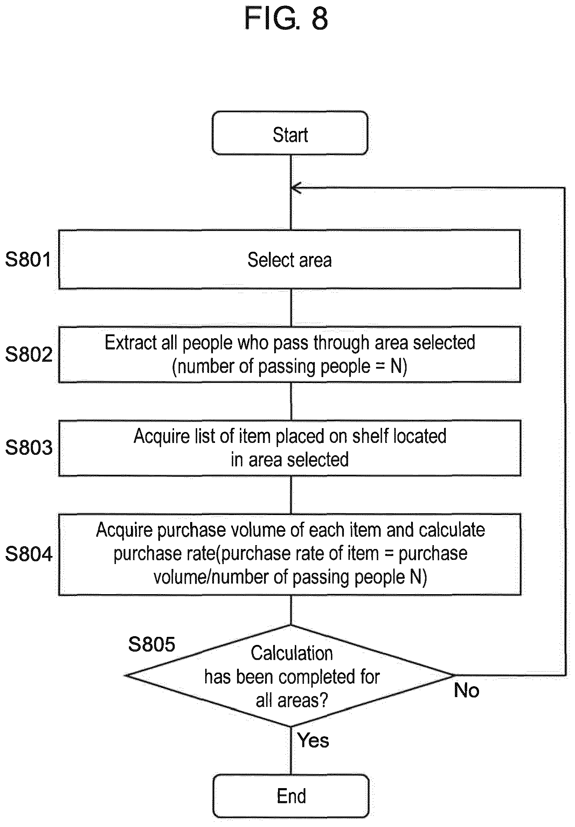

FIG. 8 shows an operation of purchase rate information generator 23 by which a purchase rate of an item is calculated. Purchase rate information generator 23 calculates a purchase rate in a predetermined period (for example, one day) from POS data 34 and traffic line information 31 in the predetermined time (for example, one day) to generate purchase rate information 36. Purchase rate information 36 generated by purchase rate information generator 23 corresponds to a purchase model used in a simulation. Furthermore, purchase rate information generator 23 serves as a purchase model generator that generates the purchase model.

Purchase rate information generator 23 first selects one of the areas constituting the inside of the store (S801) and extracts all people passing through the area thus selected based on traffic line information 31 and area information 32 (S802). In the example shown in FIG. 4, two people passing through the move origin area "A-01" (the number of passing people N = 2) are extracted. Purchase rate information generator 23 acquires a list of items placed on a shelf located in the area selected from item information 35 (S803). For example, purchase rate information generator 23 acquires "item A" placed on shelf S1 located in the area "A-01" from item information 35. Purchase rate information generator 23 acquires, from POS data 34, a purchase volume of the item placed on the shelf located in the area selected and calculates a purchase rate of the item from "the purchase rate of an item = the purchase volume/the number of passing people N" (S804). For example, purchase rate information generator 23 acquires a purchase volume "1" associated with an item ID "000A" from POS data 34 and calculates "the purchase rate of item A = 1/2 = 50%". When determining whether the purchase rates of items placed in all the areas constituting the inside of the store have been calculated (S805) and then determining that the calculation has not yet been completed, purchase rate information generator 23 returns to step S801 and repeats the purchase rate calculation processing. For example, in the example shown in FIG. 4, "the purchase rate of item B = 1/1 = 100%" is calculated from the number of passing people "1" who pass through the area "A-02", and the purchase volume "1" of "item B" placed on shelf S2 located in the area "A-02". Furthermore, "the purchase rate of item C = 0/1 = 0%" is calculated from the number of people "1" who pass through the area "A-02" and the purchase volume "0" of "item C" placed on shelf S2 located in the area "A-02".

Note that as in the description given for the calculation of the transition probability, the purchase rate calculated in step S804 also excessively varies with time. Here, on the assumption that the purchase rate of each item gradually varies with time, it is effective that the purchase rate is smoothed in terms of time. This configuration allows a simulation to be executed in consideration of variations in the purchase rate by time of day.

Furthermore, as in the case of the transition probability, it is also effective that the purchase rate is obtained for each customer group. In such a case, a method for grouping customers is desirably identical to the grouping method used for the transition probability.

### 2.3 Execution of simulation (calculation of average sales amount per customer)

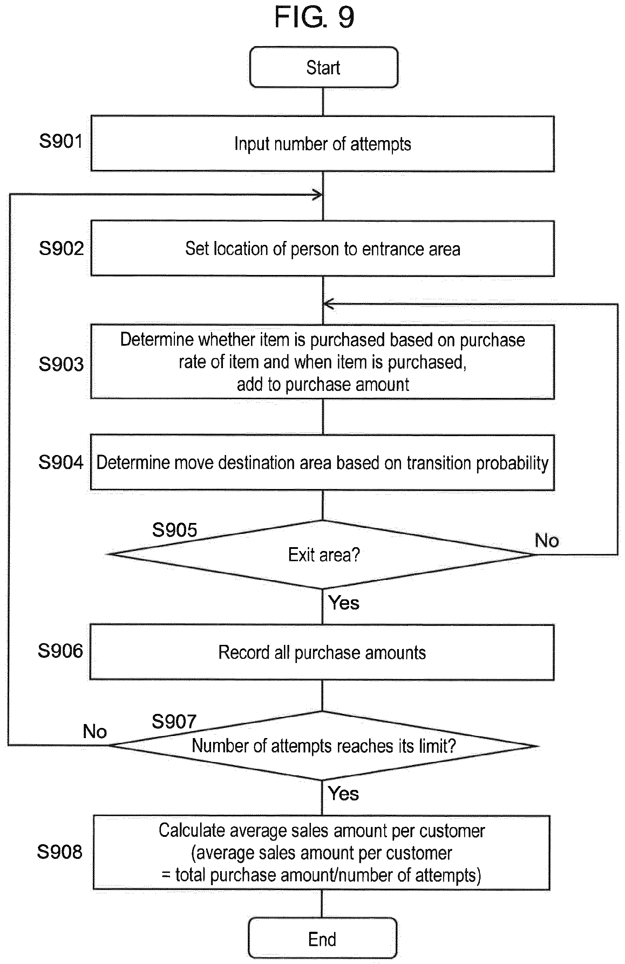

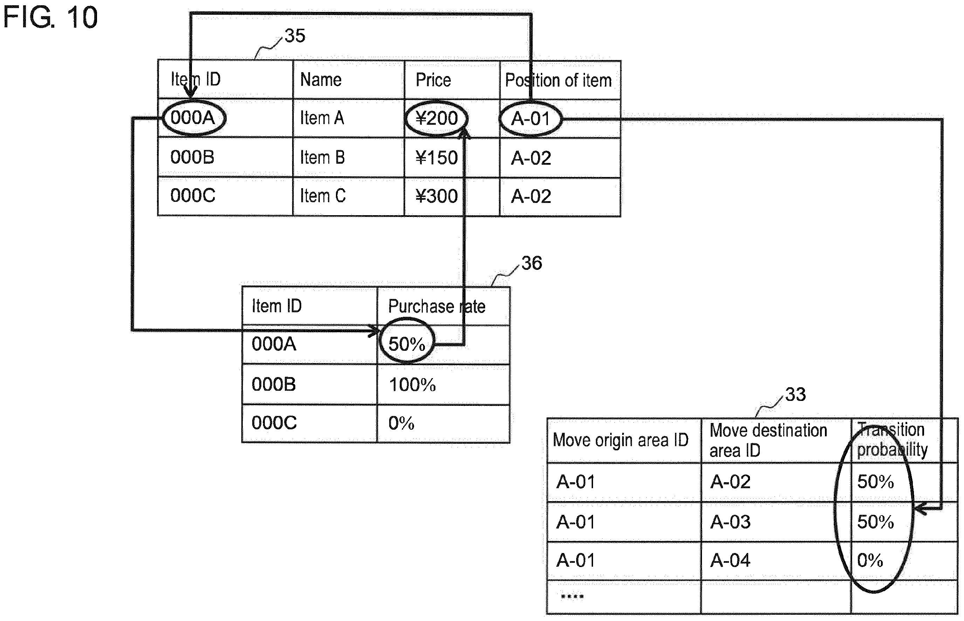

FIG. 9 shows an operation of simulation execution unit 25 by which a predicted value of a purchase amount (an average sales amount per customer indicating an item purchase amount per customer) is calculated. FIG. 10 shows an example of various types of information used for calculation of a predicted value of a purchase amount.

When inputting the number of attempts specified by a user via input unit 12 (S901), simulation execution unit 25, in order to start a simulation, first sets a location of a person to an entrance area (an area including an entrance of a store or an area closest to the entrance) (S902). When determining whether a person purchases an item placed in the entrance area based on purchase rate information 36 and then determining that the person purchases the item, simulation execution unit 25 adds a price of the item to the purchase amount (S903). For example, in the determination whether the item is purchased, simulation execution unit 25 generates a random number ranging from a first value (for example, 1) to a second value (for example, 100) inclusive and sets a threshold used for the determination whether an item is purchased based on a purchase rate. In the example shown in FIG. 10, in a case where the entrance area is "A-01", simulation execution unit 25 sets the threshold to "50" that indicates determination that an item is purchased based on a purchase rate "50%" associated with an item ID "000A". When a value ranging from "1" to "50" inclusive is generated, simulation execution unit 25 determines that item A has been purchased, and when a value ranging from "51" to "100" inclusive is generated, simulation execution unit 25 determines that item A has not been purchased. Accordingly, when determining that item A has been purchased, simulation execution unit 25 adds a price of item A that is 200 yen to the purchase amount.

Simulation execution unit 25 determines a move destination area of a person based on transition probability information 33 (S904). For example, in the determination of which of the areas the person moves to, simulation execution unit 25 generates a random number ranging from a third value (for example, 1) to a fourth value (for example, 100) inclusive and sets a threshold used for determination of which of the areas the person moves to based on the transition probability. In the example shown in FIG. 10, the threshold is set to "50" and "100" based on a transition probability "50%" of a move from the area "A-01" to the area "A-02", a transition probability "50%" of a move from the area "A-01" to the area "A-03", and a transition probability "0%" of a move from the area "A-01" to the area "A-04". Then, when a value ranging from "1" to "50" inclusive is generated, simulation execution unit 25 determines that the person moves to the area "A-02", and when a value ranging from "51" to "100" inclusive is generated, simulation execution unit 25 determines that the person moves to the area "A-03". Simulation execution unit 25 determines whether the move destination area thus determined is an exit area (an area including an exit of a store or an area closest to the exit) (S905). When the move destination area determined is not the exit area (No in S905), simulation execution unit 25 returns to step S903 and determines whether the person purchases an item in the move destination area. When determining that the person purchases the item, simulation execution unit 25 adds to the purchase amount. As described above, the addition is performed on the purchase amount until the move destination area is the exit area.

When the move destination area is the exit area (Yes in S905), simulation execution unit 25 records information on the resulting purchase amount (a total purchase amount spent by a person moving from the entrance area to the exit area) into storage unit 30 (S906). Simulation execution unit 25 repeats the processing of calculating an amount of an item purchased by a person on the assumption that the person moves from the entrance area to the exit area by the time when the number of attempts reaches its limit (No in S907). The random number varies each time the calculation is performed; thus, an area a person moving from the entrance area to the exit area passes through and whether the person purchases an item placed in the area the person passes through vary, which results in a different purchase amount for each attempt. When the number of attempts reaches its limit (Yes in S907), simulation execution unit 25 calculates the average sales amount per customer from "average sales amount per customer = total purchase amount for total number of attempts/number of attempts" based on the number of attempts input in step S901 and the total purchase amount recorded in step S906 (S908). Simulation execution unit 25 records average sales amount per customer information 37 indicating the average sales amount per customer thus calculated into storage unit 30.

In order to execute the simulation shown in FIG. 9, a user can execute a desirable simulation by inputting, into input unit 12 such as a touch panel, a changed value for a parameter the user desires to change (a transition probability, a purchase rate, and an item location) while referring to transition probability information 33, purchase rate information 36, and item information 35. For example, changing a transition probability (a parameter) in transition probability information 33 makes it possible to execute a simulation with a flow of people changed. Furthermore, changing a transition probability (a parameter) in transition probability information 33 and a purchase rate (a parameter) in purchase rate information 36 makes it possible to execute a simulation with a layout of a store changed. Moreover, changing an item location (a parameter) in item information 35 makes it possible to execute a simulation with a location of an item changed. When the user changes a parameter via input unit 12, parameter setting unit 24 changes a value of a parameter that needs to be changed in response to a change made by the user. Simulation execution unit 25 executes the simulation shown in FIG. 9 based on a parameter set by parameter setting unit 24.

Note that a configuration where options on an item to be moved and a location to which the item is moved are displayed on a parameter setting screen of display unit 13 makes it easy to understand for an operator. Thus, for each item, an item location evaluation value resulting from quantifying an effect caused by placing the item at a predetermined location is obtained. On the parameter setting screen, combinations of items that are rearranged such that the item location evaluation value increases are displayed as rearrangement options. For the item location evaluation value, for example, the use of a product of a purchase rate of an item and a transition probability of a move to an area in front of a shelf on which the items is placed is effective. This product corresponds to an evaluation value indicating that a better selling item is made more eye-catching for shoppers, which becomes an index that gives notice such as prevention of forgetting purchase of an item. Furthermore, in this case, grouping customers is also effective, and calculating the evaluation value from a purchase rate for each group and a transition probability of a move to an area in front of a shelf can make the evaluation value more accurate. Moreover, the use of a value resulting from weighting the evaluation value calculated for each group with a proportion of the number of customers belonging to each group as an evaluation value for all visiting customers is also effective.

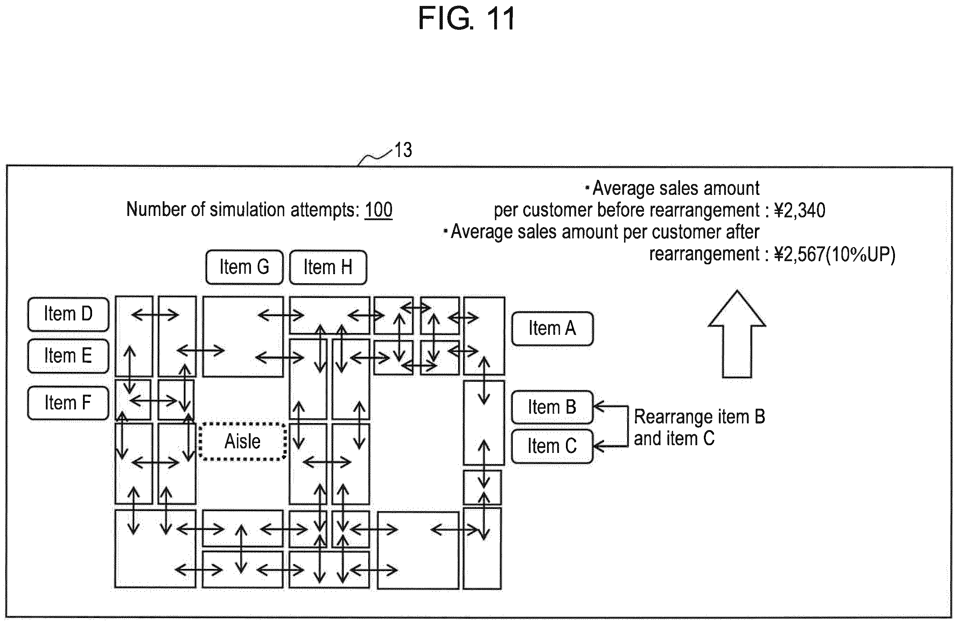

FIG. 11 shows an example of a screen displayed by display unit 13. Display unit 13 displays, based on average sales amount per customer information 37, simulation results (average sales amounts per customer) before and after a parameter change as shown in FIG. 11, for example. Note that the current average sales amount per customer may be calculated through a simulation based on the people move model (transition probability information 33 generated before a parameter change) and the purchase model (purchase rate information 36 generated before the parameter change), or alternatively, may be calculated based on an actual value acquired from traffic line information 31 and POS data 34.

Note that, as described above, a transition probability and a purchase rate of an item are obtained based on a change by time of day and a customer group, which makes it possible to execute a simulation with high accuracy. Moreover, if a proportion of the number of customers belonging to each customer group and a change in the proportion by time of day are measured, a change such as an increase in proportion of housewives before evening can be represented as a change in the transition probability and the purchase rate, which makes a simulation more accurate. Furthermore, providing another parameter used for changing a group proportion to parameter setting unit 24 makes it possible to execute a simulation of what kind of group is increased in order to increase sales of a specific item or total sales of a store.

### 3. Effects and the like

Conventionally, in a case where a flow of people is changed by point-of-purchase (POP) advertising or a barker, or a layout or a location of an item is changed, no method is established for estimating how much effect is brought about in advance. On the other hand, simulation system 1 of the present disclosure executes a simulation of calculating a predicted value of a sales amount (an average sales amount per customer) of a store when a current shopping pattern (a transition probability and a purchase rate) is modeled from traffic line information 31 acquired from images taken by monitoring camera 100, POS data 34 acquired from POS terminal device 200, area information 32 on an inside of a store, and item information 35, and a flow of people, a layout of the store, or a location of an item is changed on the model. This configuration allows an effect caused by changing a flow of people, a layout of a store, or a location of an item to be estimated in advance through a simulation. Accordingly, an index used for determination of whether measures can be taken can be obtained.

Note that, in the present exemplary embodiment, simulation device 300 displays a result (an average sales amount per customer) of the simulation on display unit 13, but a destination to which the result of the simulation is output is not limited to display unit 13. For example, simulation device 300 may transmit average sales amount per customer information 37 to an external device that has wireless or wired communication established with simulation device 300. Alternatively, simulation device 300 may record average sales amount per customer information 37 into a recording medium or output average sales amount per customer information 37 to a printer.

Note that, in the present exemplary embodiment, POS data 34 is output from POS terminal device 200. Alternatively, purchase data may be output from a different purchase terminal device.

### (Second exemplary embodiment)

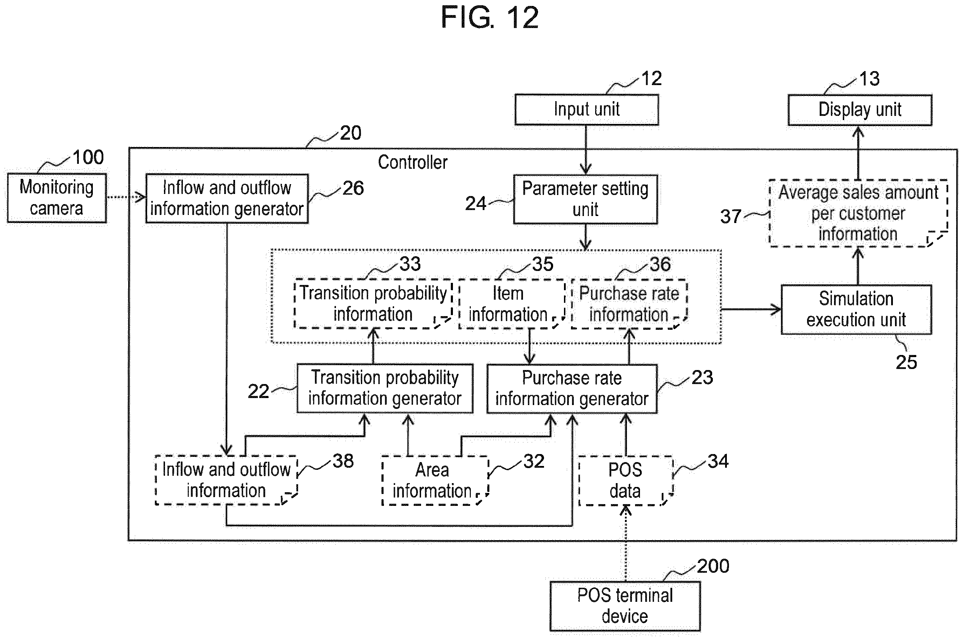

Simulation device 300 of a second exemplary embodiment generates, in place of traffic line information 31, inflow and outflow information (people flow information) indicating the number of people moving between adjacent areas in a store. FIG. 12 shows an internal configuration of controller 20 of simulation device 300 of the present exemplary embodiment. In the present exemplary embodiment, controller 20 includes, in place of traffic line information generator 21 shown in FIG. 2, inflow and outflow information generator 26 that generates inflow and outflow information 38 indicating the number of people moving between adjacent areas in a store from images taken by monitoring camera 100. Note that, in FIG. 12, inflow and outflow information generator 26 is included in controller 20 but may be configured separately from controller 20.

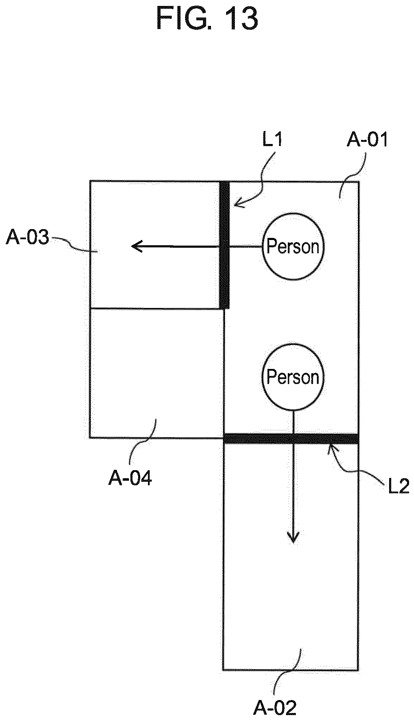

FIG. 13 shows some of a plurality of areas resulting from dividing the inside of the store and people moving between the areas. Inflow and outflow information generator 26 counts the number of people moving across a boundary between adjacent areas by referring to, for example, area information 32. In an example of FIG. 13, inflow and outflow information generator 26 measures the number of people moving across boundary L1 from an area "A-01" as the number of people moving from the area "A-01" to an area "A-03", and measures the number of people moving across boundary L2 from the area "A-01" as the number of people moving from the area "A-01" to an area "A-02".

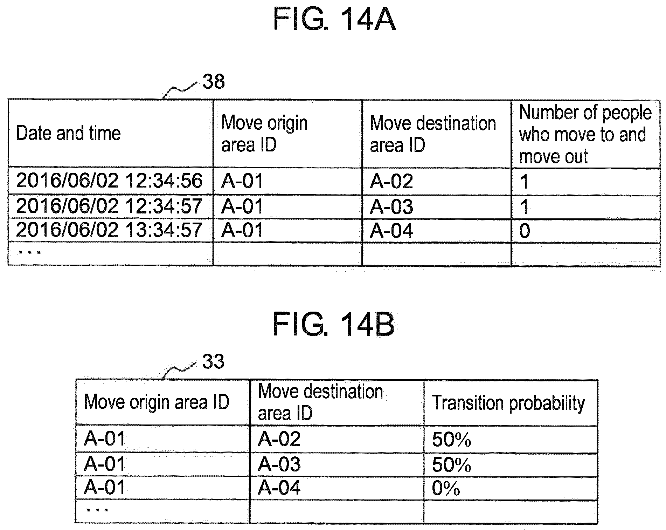

FIG. 14A shows an example of inflow and outflow information 38 generated by inflow and outflow information generator 26. Inflow and outflow information 38 includes an ID of a move origin area, an ID of a move destination area, a number of people moving from the move origin area to the move destination area (a number of inflow and outflow people), and a date and time when people move (a date and time when the number of moving people is counted). Transition probability information generator 22 generates transition probability information 33 as shown in FIG. 14B from inflow and outflow information 38 and area information 32.

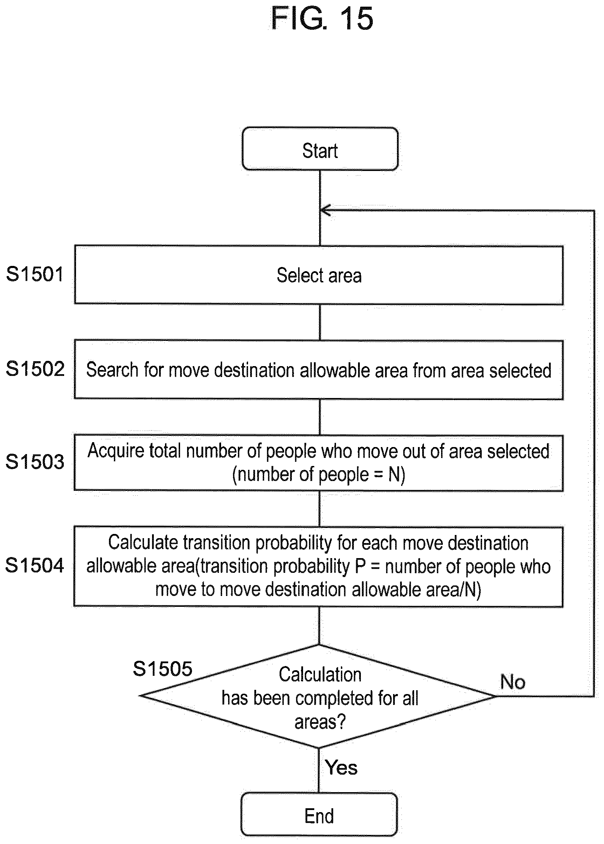

FIG. 15 shows an operation of transition probability information generator 22 by which a transition probability is calculated. Transition probability information generator 22 calculates a transition probability in a predetermined period (for example, one day) from inflow and outflow information 38 in the predetermined period (for example, one day) to generate transition probability information 33.

Transition probability information generator 22 first selects one of the areas constituting the inside of the store (S1501) and searches for an area to which a move is allowed from the area thus selected (move origin area) based on area information 32 (S1502). For example, with respect to the move origin area "A-01" shown in FIG. 13, the move allowable areas "A-02", "A-03", "A-04" are found. Transition probability information generator 22 acquires sum value N corresponding to a number of people who move out of the move origin area thus selected based on inflow and outflow information 38 (S1503). In the example shown in FIG. 13 and FIG. 14A, transition probability information generator 22 acquires "2" as the number of people moving out of the move origin area "A-01". Transition probability information generator 22 calculates a transition probability for each move destination allowable area from "transition probability P = the number of people moving to a move destination allowable area/the number of people moving out of a move origin area N" based on inflow and outflow information 38 and area information 32 (S1504). In FIG. 13 and FIG. 14A, the calculation results in the following outputs: transition probability P of a move from the area "A-01" to the area "A-02" = 1/2 = 50%; transition probability P of a move from the area "A-01" to the area "A-03" = 1/2 = 50%; and transition probability P of a move from the area "A-01" to the area "A-04" = 0/2 = 0%. When determining whether transition probabilities of moves from all the move origin areas in the store have been calculated (S1505) and then determining that the calculation has not yet been completed, transition probability information generator 22 returns to step S1501 and repeats the transition probability calculation processing.

As described above, simulation device 300 of the present exemplary embodiment calculates a transition probability by counting the number of people moving across a boundary between areas. Unlike the first exemplary embodiment, there is no need to track people shown in images according to the present exemplary embodiment, which makes processing necessary for calculating a transition probability simple.

### (Third exemplary embodiment)

In a third exemplary embodiment, a simulation is executed for a case where a person passes through an area that has a high probability of passage when moving from an entrance to an exit. A configuration of a simulation system of the present exemplary embodiment is the same as the configuration of simulation system 1 of the first exemplary embodiment or of the second exemplary embodiment.

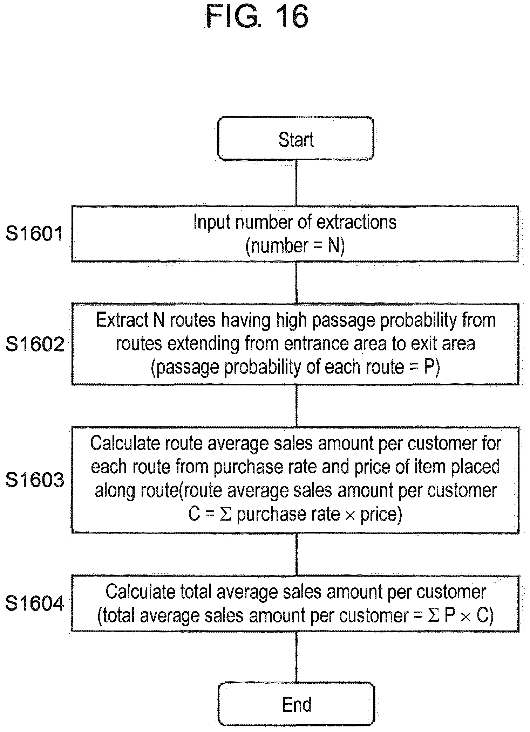

FIG. 16 shows an operation of simulation execution unit 25 of the present exemplary embodiment by which an average sales amount per customer is calculated. Simulation execution unit 25 inputs a number of extractions (the number = N) set by a user via input unit 12 (S1601). Simulation execution unit 25 extracts N routes having high passage probability P that is a probability of passage of a person along a route from routes extending from an entrance area (an area including an entrance or an area closest to the entrance) to an exit area (an area including an exit or an area closest to the exit) in descending order of passage probability P based on transition probability information 33 (S1602). Passage probability P can be acquired, for example, by multiplication of transition probabilities between areas located along routes from the entrance area to the exit area. Simulation execution unit 25 may extract a route having a high passage probability with, for example, a route search algorithm such as Dijkstra's algorithm.

Simulation execution unit 25 calculates average sales amount per customer C for each of N routes extracted from "average sales amount per customer C = ∑ (purchase rate × price)" based on a purchase rate and a price of an item placed along each route while referring to item information 35 and purchase rate information 36 (S1603).

Subsequently, simulation execution unit 25 calculates a total average sales amount per customer from "total average sales amount per customer = ∑ (passage probability P × average sales amount per customer C)" (S1604).

According to the present exemplary embodiment, a sales amount for a route having a high passage probability out of routes extending from the entrance area to the exit area can be simulated.

### (Fourth exemplary embodiment)

Simulation system 1 of a fourth exemplary embodiment extracts an optimum setting value of a parameter (a location of an item included in item information 35, a transition probability included in transition probability information 33, and a purchase rate included in purchase rate information 36).

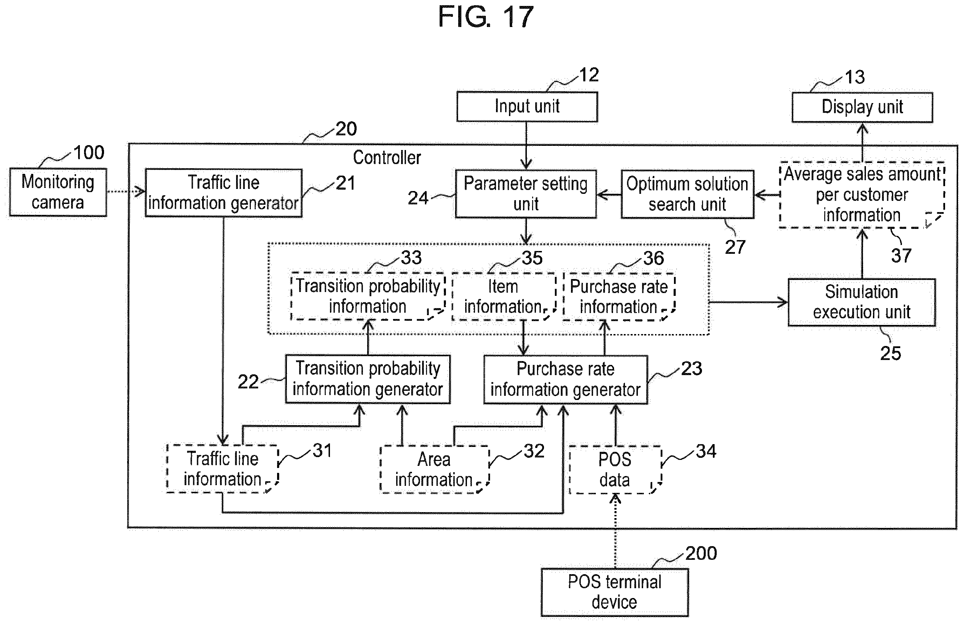

FIG. 17 shows an internal configuration of controller 20 of simulation device 300 of the present exemplary embodiment. Controller 20 according to the present exemplary embodiment includes optimum solution search unit 27 that searches for a parameter that maximizes a sales amount (an average sales amount per customer). Such a parameter set corresponds to a combination of item information 35, transition probability information 33, and purchase rate information 36.

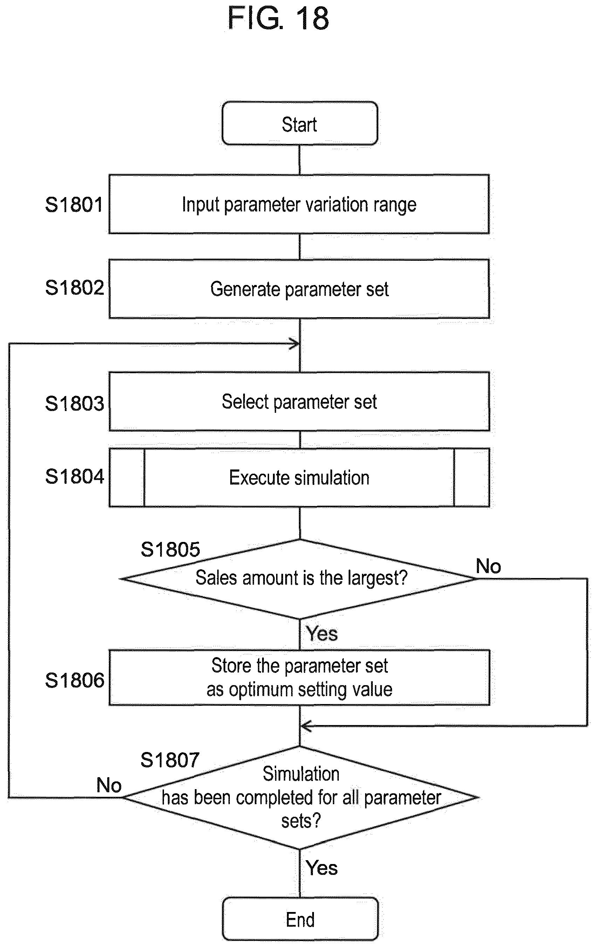

FIG. 18 shows a search operation of controller 20 by which an optimum parameter set is searched for. Parameter setting unit 24 inputs a parameter variation range set by a user via input unit 12 (S1801). The parameter variation range corresponds to, for example, a variation range of a value corresponding to a location of an item, a transition probability, or a purchase rate. Parameter setting unit 24 sets respective values of a transition probability, a location of an item, and a purchase rate within the parameter variation range set by the user to generate a plurality of parameter sets (S1802). Simulation execution unit 25 selects one of the parameter sets thus generated (S1803), executes a simulation shown by steps S901 to S908 of FIG. 9, and calculates a sales amount (an average sales amount per customer) (S1804).

When another sales amount (another average sales amount per customer) has been already calculated based on another parameter set, optimum solution search unit 27 compares the sales amount calculated through the simulation using the current parameter set with the already-calculated sales amount to determine whether the sales amount calculated through the simulation using the current parameter set is the largest (S1805). When the sales amount calculated through the simulation using the current parameter set is the largest, optimum solution search unit 27 stores the current parameter set as an optimum setting value into storage unit 30 (S1806). When determining whether simulations for all the parameter sets generated in step S1802 have been executed (S1807) and then determining that the simulations have not yet been completed, simulation execution unit 25 returns to step S1803 and executes a simulation based on another parameter set. As described above, a parameter set that maximizes a sales amount (an average sales amount per customer) is extracted from all the parameter sets generated in step S1802.

According to the present exemplary embodiment, a parameter set that maximizes a sales amount (an average sales amount per customer) can be extracted.

Simulation system 1 of the present disclosure can be configured with, for example, cooperation between a hardware resource such as a processor or a memory, and a program.

### (Other exemplary embodiments)

In the first to fourth exemplary embodiments, descriptions have been given on the assumption that things to be handled in the store are items that are products. However, items for transaction with customers include not only products but also services. Of stores, a barber shop or a game arcade does not sell items, but makes transaction with customers by providing the customers with opportunities of having haircuts or enjoying playing games. These activities are services, and implementing the content of the present disclosure also allows for a simulation of a sales amount (an average sales amount per customer) gained through such services.

Furthermore, examples of such a facility include not only a store but also a shopping mall (shopping area) where a plurality of stores are located together and a theme park where a plurality of various attractions are located together. The simulation device according to the present disclosure can be used for such a shopping mall or a theme park.

For example, in a case where the simulation device according to the present disclosure is used for a shopping mall, the simulation device includes: an acquisition unit that acquires people flow information indicating a flow of people moving in the shopping mall, POS data (purchase data) indicating at least one item that is a product or a service purchased in each of stores that constitute the shopping mall, and price information indicating a price of the at least one item sold in each of the stores; a people flow model generator that generates a people flow model based on the people flow information; a purchase model generator that generates a purchase model based on the POS data and the people flow information; and a simulation execution unit that calculates a predicted value of a purchase amount of the at least one item purchased by a person moving in the shopping mall based on the price information, the people flow model, and the purchase model. Note that such stores include, for example, stalls that are temporarily set up.

The use of such a simulation device allows for a simulation of a sales amount (an average sales amount per customer) spent in a shopping mall.

In a case where the simulation device according to the present disclosure is used for a theme park, the simulation device includes: an acquisition unit that acquires people flow information indicating a flow of people moving in the theme park, POS data indicating at least one item that is a product or a service provided at each of attractions that are provided in the theme park, and price information indicating a price of the at least one item provided at each of the attractions; a people flow model generator that generates a people flow model based on the people flow information; a purchase model generator that generates a purchase model based on the POS data and the people flow information; and a simulation execution unit that calculates, based on the price information, the people flow model, and the purchase model, a predicted value of a purchase amount of the at least one item spent when a person moving in the theme park uses an attraction.

The use of such a simulation device allows for a simulation of a sales amount (an average sales amount per customer) spent when an attraction in a theme park is used.

Moreover, the content of the present disclosure can also be implemented for a case where transactions of items or services are made over the Internet. For example, the content of the present disclosure helps a conversion rate to increase in Internet transactions made with the help of IT (for example, a computer). Conversion refers to purchase of at least one item that is a product or a service through, for example, Internet shopping. Further, the conversion rate refers to a proportion of the number of people who have actually purchased a certain item or service to the number of people who have visited a sales site for the certain item or service. The use of the simulation system according to the present disclosure allows an increase in the conversion rate. Note that, with a case where the at least one item is not actually purchased but member registration or a request for a brochure is made at the site set as the conversion rate, the simulation device according to the present disclosure can be used.

As described above, the first to fourth exemplary embodiments have been described as examples of the technique disclosed in the present application. However, the technique in the present disclosure is not limited to the exemplary embodiments and is applicable to exemplary embodiments in which changes, replacements, additions, omissions, or the like are made as appropriate. Furthermore, the components described in the first to fourth exemplary embodiments can be combined to form a new exemplary embodiment.

The components shown in the attached drawings and described in the detailed description may include, for the illustration of the above-described technique, not only components essential for the solution to the problem but also components not essential for the solution to the problem. Thus, it should not be immediately deemed that, merely based on the fact that the components that are not essential are shown in the attached drawings and described in the detailed description, the components that are not essential are essential.

Furthermore, since the aforementioned exemplary embodiments are intended to illustrate the technique in the present disclosure, various changes, replacements, additions, omissions, or the like can be made within the scope of the claims and their equivalents.

### INDUSTRIAL APPLICABILITY

The present disclosure is applicable to a simulation device, a simulation system, and a simulation method that simulate a sales amount of a store.

### REFERENCE MARKS IN THE DRAWINGS

1: simulation system
10: input and output unit
11: receiver
12: input unit
13: display unit
20: controller
21: traffic line information generator
22: transition probability information generator
23: purchase rate information generator
24: parameter setting unit
25: simulation execution unit
26: inflow and outflow information generator
27: optimum solution search unit
30: storage unit
100: monitoring camera
200: POS terminal device
300: simulation device

## Claims

1. A simulation device that simulates a purchase amount of at least one item that is a product or a service purchased in a facility, the simulation device comprising:
an acquisition unit that acquires people flow information indicating a flow of people moving in the facility, purchase data indicating the at least one item purchased in the facility, and price information indicating a price of the at least one item placed in the facility;
a people flow model generator that generates a people flow model based on the people flow information;
a purchase model generator that generates a purchase model based on the purchase data and the people flow information; and
a simulation execution unit that calculates, based on the price information, the people flow model, and the purchase model, a predicted value of a purchase amount of the at least one item purchased by a person moving in the facility.

2. The simulation device according to claim 1, wherein
the acquisition unit further acquires area information indicating a range of each of a plurality of areas that constitute an inside of the facility and position information indicating where the at least one item is placed in the facility,
the people flow model generator generates, as the people flow model, transition probability information indicating a transition probability of a move of a person between adjacent areas based on the area information and the people flow information,
the purchase model generator generates, as the purchase model, purchase rate information indicating a purchase rate of the at least one item based on the position information, the purchase data, the area information, and the people flow information, and
the simulation execution unit calculates the predicted value based on the price information, the position information, the transition probability information, and the purchase rate information.

3. The simulation device according to claim 2, further comprising:
a receiver that receives images resulting from imaging the inside of the facility with a monitoring camera; and
a traffic line information generator that identifies a person shown in the images and extracts locations of the person identified on a time-series basis to generate the people flow information.

4. The simulation device according to claim 2, further comprising:
a receiver that receives images resulting from imaging the inside of the facility with a monitoring camera; and
an inflow and outflow information generator that measures a number of people who are shown in the images and move between the adjacent areas and generates the people flow information based on the number of people who move between the adjacent areas.

5. The simulation device according to any one of claims 2 to 4, wherein
the simulation execution unit
calculates a passage probability corresponding to a probability of passage of a person along each of a plurality of routes extending from a first predetermined area to a second predetermined area based on the transition probability information, and
calculates a predicted value of a purchase amount of the at least one item purchased by a person moving from the first predetermined area to the second predetermined area based on a purchase rate and a price of the at least one item placed along a predetermined number of the routes in descending order of the passage probability.

6. The simulation device according to any one of claims 2 to 5, further comprising a parameter setting unit that changes at least one of the position information, the transition probability information, and the purchase rate information based on a user input,
wherein the simulation execution unit calculates the predicted value of a purchase amount of the product based on the change made by the parameter setting unit.

7. The simulation device according to claim 6, wherein
the parameter setting unit changes at least one of the position information, the transition probability information, and the purchase rate information and generates a plurality of parameter sets, the parameter sets each including the position information, the transition probability information, and the purchase rate information, and
the simulation device further comprising an optimum solution search unit that extracts, from the plurality of parameter sets, the parameter set that maximizes the predicted value of a purchase amount of the at least one item calculated by the simulation execution unit.

8. The simulation device according to claim 1, wherein the facility is a single store.

9. The simulation device according to claim 1, wherein the facility is a shopping mall where a plurality of stores are located together.

10. The simulation device according to claim 1, wherein the facility is a theme park where a plurality of attractions are located together.

11. A simulation device that simulates a purchase amount of at least one item that is a product or a service purchased in a shopping mall, the simulation device comprising:
an acquisition unit that acquires people flow information indicating a flow of people moving in the shopping mall, purchase data indicating the at least one item purchased in a plurality of stores that constitute the shopping mall, and price information indicating a price of the at least one item sold in the plurality of stores;
a people flow model generator that generates a people flow model based on the people flow information;
a purchase model generator that generates a purchase model based on the purchase data and the people flow information; and
a simulation execution unit that calculates, based on the price information, the people flow model, and the purchase model, a predicted value of a purchase amount of the at least one item purchased by a person moving in the shopping mall.

12. A simulation device that simulates a purchase amount of at least one item that is a product or a service provided at a plurality of attractions in a theme park, the simulation device comprising:
an acquisition unit that acquires people flow information indicating a flow of people moving in the theme park, purchase data indicating the at least one item provided at the plurality of attractions, and price information indicating a price of the at least one item provided at the plurality of attractions;
a people flow model generator that generates a people flow model based on the people flow information;
a purchase model generator that generates a purchase model based on the purchase data and the people flow information; and
a simulation execution unit that calculates, based on the price information, the people flow model, and the purchase model, a predicted value of a purchase amount of the at least one item purchased by a person moving in the theme park.

13. A simulation system that simulates a purchase amount of at least one item that is a product or a service purchased in a facility, the simulation system comprising:
a monitoring camera that outputs images resulting from imaging an inside of a facility;
a purchase terminal device that generates and outputs purchase data indicating the at least one item purchased in the facility; and
the simulation device according to any one of claims 1 to 12 that calculates the predicted value of the purchase amount of the at least one item from the images and the purchase data.

14. A simulation method for simulating a purchase amount of at least one item that is a product or a service purchased in a facility, the simulation method comprising:
causing an acquisition unit to acquire people flow information indicating a flow of people moving in the facility, purchase data indicating the at least one item purchased in the facility, and price information indicating a price of the at least one item placed in the facility;
causing a controller to generate a people flow model based on the people flow information;
causing the controller to generate a purchase model based on the purchase data and the people flow information; and
causing the controller to calculate, based on the price information, the people flow model, and the purchase model, a predicted value of the purchase amount of the at least one item purchased by a person moving in the facility.

15. The simulation method according to claim 14, wherein
in the causing the acquisition unit to acquire, area information indicating a range of each of a plurality of areas that constitute an inside of the facility and position information indicating where the at least one item is placed in the facility are further acquired,
in the causing the controller to generate the people flow model, transition probability information indicating a transition probability of a move of a person between adjacent areas based on the area information and the people flow information is generated as the people flow model,
in the causing the controller to generate the purchase model, purchase rate information indicating a purchase rate of the at least one item is generated as the purchase model based on the position information, the purchase data, the area information, and the people flow information, and
in the causing the controller to calculate the predicted value, the predicted value is calculated based on the price information, the position information, the transition probability information, and the purchase rate information.
